# EUROPÄISCHE PATENTSCHRIFT

(11) **EP 0 804 355 B1**
(45) Veröffentlichungstag und Bekanntmachung des Hinweises auf die Patenterteilung: **21.07.1999**
(21) Anmeldenummer: 96901250.9
(22) Anmeldetag: 10.01.1996
(51) Int. Cl.: B60S 1/04, B60S 1/50, B60H 3/06

(54) **MODUL FÜR EIN KRAFTFAHRZEUG**
MODULE FOR A MOTOR VEHICLE
MODULE DESTINE A UN VEHICULE A MOTEUR

(30) Priorität: 17.01.1995 DE 19501210
(43) Veröffentlichungstag der Anmeldung: 05.11.1997
(73) Patentinhaber: ITT Automotive Europe GmbH, 60488 Frankfurt am Main (DE)
(72) Erfinder: EGNER-WALTER, Bruno, D-74076 Heilbronn (DE); SCHMID, Eckhardt, D-74336 Brackenheim (DE)
(74) Vertreter: Dreiss, Fuhlendorf, Steimle & Becker
(86) Internationale Anmeldenummer: EP9600076
(87) Internationale Veröffentlichungsnummer: WO9622203

(56) Entgegenhaltungen:
- EP-A- 0 588 708
- DE-A- 2 322 992
- DE-A- 3 734 130
- FR-A- 2 668 110
- FR-A- 2 684 950
- US-A- 5 261 254
- PATENT ABSTRACTS OF JAPAN vol. 010, no. 025 (M-450), 31.Januar 1986 & JP,A,60 183251 (NITSUSAN SHIYATAI KK), 18.September 1985,

## Beschreibung

Die Erfindung bezieht sich auf ein Modul für ein Kraftfahrzeug, welches gemäß dem Oberbegriff des Anspruchs 1 eine Scheibenwischeranlage und eine Scheibenwaschanlage aufweist, wobei ein Behältnis, welches zum großen Teil als Flüssigkeitsbehälter ausgebildet ist und einen Tank für Waschflüssigkeit besitzt sowie eine dem Tank zugeordnete Pumpe trägt, so geformt ist, daß es die Scheibenwischeranlage zumindest annähernd komplementär umgibt und als Abdeckung des als Wasserkasten bezeichneten, unmittelbar vor der Spritzwand und unterhalb der Windschutzscheibe liegenden Bereiches der Fahrzeugkarosserie dient und außerdem einen mit einem Frischluftfilter versehenen Luftdurchtritt zum Fahrzeuginnenraum aufweist, wobei die auf einen Träger montierte Scheibenwischeranlage mit dem Behältnis zu einer Baueinheit verbindbar ist.

Aus der EP 0 588 708 A1 ist eine Scheibenwischeranlage mit diesen Merkmalen bekannt. Obwohl diese Anlage kompakt gestaltet ist und den im Bereich des Wasserkastens vorhande nen Platz vollständig ausfüllt, erfüllt sie lediglich die allgemein bekannten Funktionen einer Scheibenwisch-Wasch anlage.

Aufgabe der Erfindung ist es, eine derartige Scheibenwisch-Waschanlage zu einem insgesamt an den Fahrzeughersteller lieferbaren Modul mit erweiterten Funktionen weiterzuentwickeln.

Diese Aufgabe wird durch ein Modul für ein Kraftfahrzeug mit den Merkmalen des Anspruchs 1 gelöst. Durch die beschriebene Merkmalskombination wird ein kompaktes Modul gekennzeichnet, welches beim Fahrzeughersteller mit geringem Montageaufwand in die Fahrzeugkarosserie einzubauen ist und welches dem Fahrzeugnutzer hinsichtlich seiner Funktionsvielfalt einen überaus hohen Komfort bietet.

Durch das Vorhandensein mehrerer aber trotzdem ausreichend großer Tanks für verschiedene Flüssigkeiten ergeben sich je nach Ausgestaltungsvariante entweder durch den Fahrzeugführer wählbare oder automatisch gesteuerte Funktionen der den verschiedenen Tanks zugeordneten Pumpen hinsichtlich der Zusammensetzung oder der Funktion der im Tank bevorrateten oder der auf die zu reinigende Windschutzscheibe aufzubringenden Waschflüssigkeit. Bei normal verschmutzter Scheibe wird normale Waschflüssigkeit, das heißt Waschwasser und eventuell Waschmittelzusatz, auf die Scheibe gespritzt; bei stark verschmutzter Scheibe ist aus einem separaten Behälter ein Intensiv-Reinigungsmittel der Waschflüssigkeit zudosierbar. Vorteilhaft ist dabei, nicht dem gesamten im Tank befindlichen Vorrat an Waschflüssigkeit das Intensivreinigungsmittel beizumischen, sondern nur der für den betreffenden Reinigungsvorgang benötigten Waschflüssigkeitsmenge. Dieses ist mit einem durch die Merkmale der Ansprüche 5 und 6 gekennzeichneten Modul in einfacher Weise möglich, wobei der geförderte Intensivreinigungsmittelstrom in die zur Spritzdüse führende Waschflüssigkeitsleitung eingekuppelt wird, und zwar insbesondere durch ein T- oder Y-förmiges Kupplungsstück.

Wenn in der kälteren Jahreszeit die Gefahr des Einfrierens der Waschflüssigkeit besteht, wird aus einem anderen gesonderten Tank Frostschutzmittel in den Tank für Waschflüssigkeit übergepumpt. Dieser Vorgang wird entweder durch den Fahrer manuell gesteuert oder in einer vorteilhaften Weiterbildung der Erfindung gemäß Anspruch 3 durch ein mit der am Tank für Frostschutzmittel vorgesehenen Pumpe verbundenes elektronisches Steuerteil. Dieses elektronische Steuerteil, das gemäß Anspruch 4 vorteilhaft in einer gesonderten Kammer oder einer entsprechenden Nische des Behältnisses untergebracht ist, ist dabei so aufgebaut, daß es anhand der von den verschiedenen Sensoren erfaßten Werte die richtige Menge Frostschutzmittel bestimmt. Die erfaßten Werte der Dichte und der Temperatur der Waschflüssigkeit drücken den aktuellen Grad des Frostschutzes der Waschflüssigkeit aus, der mit einem aus der aktuellen Außentemperatur abgeleiteten erforderlichen Grad des Frostschutzes verglichen wird. Dementsprechend aktiviert das elektronische Steuerteil die Pumpe für Frostschutzmittel so lange, bis eine Angleichung des aktuellen Grades des Frostschutzes der Waschflüssigkeit an den erforderlichen Grad des Frostschutzes der Waschflüssigkeit erreicht ist.

Da Frostschutzmittel für Scheibenwaschanlagen allgemein eine geringere Dichte besitzt als Wasser, ist eine Ausgestaltung des Moduls gemäß Anspruch 2 für eine gute Durchmischung von Waschflüssigkeit und Frostschutzmittel, insbesondere bei stehendem Fahrzeug, von Vorteil, wonach das Frostschutzmittel durch den Boden oder in Bodennähe durch eine Seitenwand in den Tank für Waschflüssigkeit eingepumpt wird.

Eine weitere Komfortverbesserung hinsichtlich der Wartung der Wisch-Waschanlage als Bestandteil des Moduls wird durch eine Ausgestaltung gemäß Anspruch 8 ermöglicht, wodurch der Tank für Waschflüssigkeit automatisch mit anfallendem Regenwasser befüllt wird. Dabei wird eine besonders einfache Konstruktion des Regenwassereinlaufs dadurch erreicht, daß dieser gemaß Anspruch 9 direkt an den Einfüllstutzen des Tanks für Waschflüssigkeit angeschlossen ist. Der im Einfüllstutzen bereits vorhandene Füllstandsbegrenzer wird damit auch für den Regenwassereinlauf wirkam, ein zusätzlicher Füllstandsbegrenzer für den Regenwassereinlauf ist somit nicht erforderlich. Da aber im Fahrbetrieb, speziell im Winterfahrbetrieb, und beim Waschen des Fahrzeuges, insbesondere in Fahrzeugwaschanlagen, die Gefahr der Einleitung stark verschmutzten oder mit unerwünschten Zusätzen behafteten Wassers über die Regenwasserauffangvorrichtung in den Tank für Waschflüssigkeit besteht, ist die Regenwasserauffangvorrichtung in derartigen Fällen mittels eines geeigneten Verschlusses gegenüber der Umwelt des Fahrzeuges abzuschotten.

Für eine automatische Steuerung der Bewegungen der Scheibenwischer ist die Verwendung von Regensensoren oder Feuchtigkeitssensoren bereits bekannt. Beim Fahrzeughersteller kann aber eine diesbezügliche Montage wesentlich vereinfacht werden, wenn das Modul bereits mit einem derartigen Sensor ausgestattet ist, der gemäß Anspruch 10 in einem zur Windschutzscheibe weisenden, nicht von der Motorhaube des Fahrzeuges überdeckten Abschnitt des Behältnisses angeordnet ist.

Für den Fall, daß Module mit unterschiedlichen Typen von Scheibenwischeranlagen hergestellt werden sollen, ist es besonders kostengünstig, wenn der jeweils zu verwendende Scheibenwischeranlagentyp mit einem gleichen Behältnis kombinierbar ist. Deshalb wird eine Ausgestaltung gemäß Anspruch 11 empfohlen, wonach die verschiedenen zur Anwendung vorgesehenen Scheibenwischeranlagentypen an den betreffenden Schlüsselstellen gleichartig gestaltete bzw. geformte Partien und gleiche Befestigungsabschnitte aufweisen. Dadurch ist nur ein einziger Typ von Behältnis erforderlich, was vor allem die Lagerung und Disposition der Modulbestandteile vereinfacht.

Wenn ein Kraftfahrzeug mit einer sogenannten Linearwischeranlage ausgestattet werden soll, wird ein Modul gemäß Anspruch 12 zur Anwendung vorgeschlagen. Für eine günstigere Gestaltung des Transportes, insbesondere im Hinblick auf die Auslastung des Transportraumes, kann es hierbei jedoch vorteilhaft sein, die Scheibenwischeranlage und das komplett bestückte Behältnis separat voneinander zum Fahrzeughersteller zu transportieren und erst dort im Zusammenhang mit der Montage am Fahrzeug miteinander zu dem eigentlichen Modul zu verbinden.

Weitere vorteilhafte Ausgestaltungen eines Moduls mit einer Linearwischeranlage gemäß der Ansprüche 13 bis 17 sind in den Ausführungsbeispielen näher beschrieben.

Für gehobenere Ansprüche an das Frischluftfilter wird eine Ausgestaltung gemäß Anspruch 18 empfohlen, wonach dieses ein auswechselbar in der entsprechenden Ausnehmung des Behältnisses angebrachtes Filtersystem aus einem Feinfilter und einem nachgeschalteten Aktivkohlefilter ist. Von diesem Filtersystem werden Staub, Ruß, Blütenpollen sowie Autoabgase zurückgehalten.

Da in bestimmten Intervallen ein Wechsel dieses Frischluftfilters erforderlich ist, ist es leicht auswechselbar in der betreffenden Ausnehmung des Behältnisses angebracht.

Letztendlich kann es vorteilhaft sein, in die Abdeckung des Moduls gemäß Anspruch 19 eine Motorraumbeleuchtung und einen zugehörigen, durch Öffnen oder Schließen der Motorhaube zu betätigenden Schalter zu integrieren.

Einige Ausführungsbeispiele werden anhand der Zeichnungen nachfolgend beschrieben. In den Zeichnungen zeigen:
- Fig. 1: eine schematische Übersicht des Vorderteiles einer Rohkarosserie eines Personenkraftwagens,
- Fig. 2: als teilweise Explosionsdarstellung ein Modul mit einer Rohrrahmenanlage,
- Fig. 3: als Schnittdarstellung eine schematische Teilübersicht eines Behältnisses eines Moduls,
- Fig. 4: eine schematische Darstellung einer Intensiv-Waschreinigung,
- Fig. 5: ein Frischluftfiltersystem,
- Fig. 6: als teilweise Explosionsdarstellung ein Modul mit einer Linearwischeranlage,
- Fig. 7: in schematischer Schnittdarstellung die obere Verbindung eines Moduls mit Linearwischeranlage mit der Karosserie,
- Fig. 8: ein anderes Beispiel einer oberen Verbindung eines Moduls mit Linearwischeranlage mit der Karosserie in schematischer Schnittdarstellung,
- Fig. 9: eine untere Verbindung eines Moduls mit Linearwischeranlage mit der Karosserie in schematischer Schnittdarstellung,
- Fig. 10: eine seitliche Verbindung eines Moduls mit Linearwischeranlage mit einer Karosserie in Schnittdarstellung,
- Fig. 11: ein anderes Beispiel eines Seitenrandes eines Moduls mit Linearwischeranlage in Schnittdarstellung und
- Fig. 12: ein weiteres Beispiel eines Seitenrandes eines Moduls mit Linearwischeranlage in Schnittdarstellung.

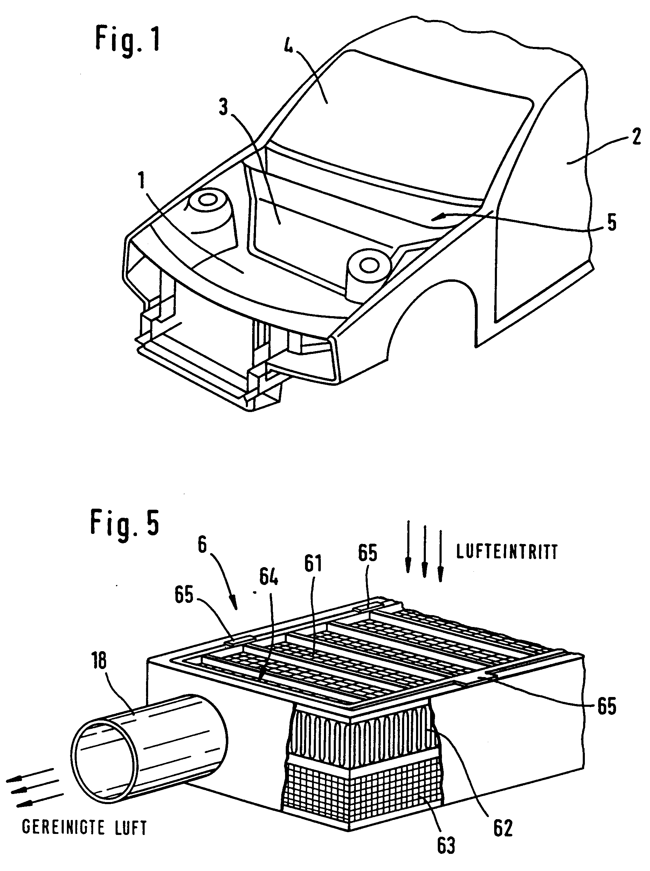

Die Fig. 1 dient hauptsächlich dazu, eine Übersicht über die örtlichen Gegebenheiten an einer Rohkarosserie eines Personenkraftwagens zu geben. Es ist allgemein bekannt, daß zur Abgrenzung des Motorraumes 1 gegen den Fahrzeuginnenraum 2 eine sogenannte Spritzwand 3 dient. Der Bereich, der sich unmittelbar vor der Spritzwand 3 und unterhalb der Öffnung 4 für die Windschutzscheibe quer über die gesamte Breite des Motorraumes 1 erstreckt, wird im allgemeinen als Wasserkasten 5 bezeichnet. In den Bereich dieses Wasserkastens 5 ist das erfindungsgemäße Modul einzubauen.

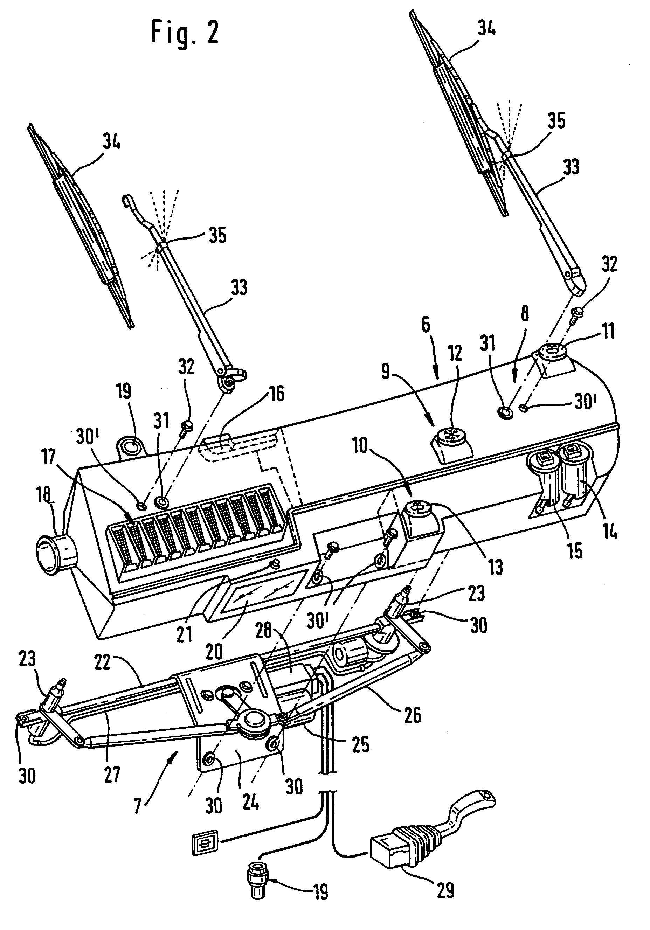

Ein Beispiel eines derartigen Moduls ist in Fig. 2 insgesamt in Explosionsdarstellung gezeigt. Als größtes Teil dieses Moduls ist etwa in Mitte der Fig. 2 das Behältnis 6 dargestellt, dessen äußere Gestalt so geformt ist, daß es der Karosserieform im Bereich des Wasserkastens 5 derart angepaßt ist, daß es gleichzeitig als Abdeckung des Wasserkastens 5 in diesem Abschnitt wirkt. In seinem in Fig. 2 verdeckten unteren Bereich ist das Behältnis 6 so geformt, daß es die unterhalb des Behältnisses 6 gezeichnete Scheibenwischeranlage 7 zumindest nahezu komplementär umgeben kann. Es sind also an der Unterseite des Behältnisses 6 entsprechende Einbuchtungen bzw. Nischen vorhanden, von welchen die Scheibenwischeranlage 7, die in diesem Fall eine an sich bekannte Rohrrahmenanlage ist, aufgenommen werden kann.

Der mit Bezug auf Fig. 2 sich abhebende größere rechte Bereich des Behältnisses 6 ist im wesentlichen als Flüssigkeitsbehälter ausgebildet, der durch entsprechende Trennwände in einen Tank 8 für Waschflüssigkeit, einen Tank 9, für Frostschutzmitel und einen Tank 10 für Intensivreinigungsmittel unterteilt ist. Diese Tanks 8, 9, 10 sind unabhängig voneinander und müssen deshalb separat befüllbar sein. Dementsprechend sind an der Oberseite des Behältnisses ein Einfüllstutzen 11 für Waschflüssigkeit, ein Einfüllstutzen 12 für Frostschutzmittel und Einfüllstutzen 13 für Intensivreinigungsmittel zu erkennen. An der rechten Vorderseite des Behältnisses sind zwei in entsprechenden Nischen des Behältnisses 6 angebrachte Pumpen 14, 15 zu sehen. Die rechte Pumpe 14 ragt mit ihrem Saugstutzen in den Tank 8 für Waschflüssigkeit, d. h. ist sie ist zur Förderung von Waschflüssigkeit bestimmt. Die linke Pumpe 15 ist mit ihrem Saugstutzen mit dem Tank 13 für Intensivreinigungsmittel verbunden. Die Pumpe 14 für Waschflüssigkeit ist in bekannter Weise mit einem Füllstandsgeber ausgestattet, der dem Fahrer signalisiert, wenn dem Tank 8 Waschflüssigkeit zugeführt werden muß. Eine Pumpe zur Förderung von Frostschutzmittel ist in Fig. 2 nicht sichtbar. Sie ist in einer verdeckten Nische des Behältnisses 6 angeordnet. An der oberen Kante des Behältnisses 6 ist noch der Regenwassereinlauf 16 zu sehen, der, nicht sichtbar, unmittelbar in den Einfüllstutzen 11 für Waschflüssigkeit einmündet. Andererseits steht der Regenwassereinlauf 16 mit einer nicht dargestellten Regenwassersammelvorrichtung in Verbindung.

Der kleinere, linke Teil des Behältnisses 6 ist im wesentlichen dazu bestimmt, im Bereich eines Luftdurchtrittes 17 leicht auswechselbar ein Frischluftfilter aufzunehmen. An der linken Seite des Behältnisses 6 ist der Austrittsstutzen 18 zu erkennen, aus dem im Betrieb die gereinigte Frischluft austritt und über einen an diesen Austrittsstutzen 18 anzuschließenden Luftkanal in den Fahrzeuginnenraum 2 (Fig. 1) geleitet wird. Oberhalb des Luftdurchtrittes 17 ist an der hinteren Kante des Behältnisses 6 noch ein Regensensor 19 angebracht, dessen empfindliche Oberseite nicht von der Motorhaube des Fahrzeuges überdeckt werden darf. Da aber der Luftdurchtritt 17 von der Motorhaube überdeckt würde, müssen an dieser Stelle in der Motorhaube entsprechende Luftdurchtrittsöffnungen vorgesehen sein.

Im Bereich der Luftdurchtrittsöffnung ist in die vordere, in den Motorraum 1 weisende Wand des Behältnisses 6 eine Motorraumbeleuchtung 20 eingebaut, die über den durch die Motorhaube betätigbaren Schalter 21 angesteuert wird.

Die Scheibenwischeranlage 7 weist in bekannter Weise einen sogenannten Rohrrahmen 22 auf, der die beiden Wischerlager 23 trägt und zu dem eine Motortragplatte 24 gehört, auf welcher der Wischermotor 25 befestigt ist. Über ein von dem Motor angetriebenes Gestänge 26 werden die Lagerwellen der Wischlager 23 in pendelnde Drehbewegung versetzt. Die Lagerwellen der beiden Wischlager 23 sind hohl ausgebildet, so daß in der Waschflüssigkeitsleitung 27 geförderte Waschflüssigkeit diese hohlen Lagerwellen passieren kann. Die Waschflüssigkeitsleitung 27 wird auf später noch zu beschreibende Art und Weise mit Waschflüssigkeit beaufschlagt. Unmittelbar neben dem Wischermotor 25 ist noch eine elektrische Steckverbindung 28 zu erkennen, über welche der Wischermotor 25 von entsprechenden Steuerelementen, z. B. Lenkstockschalter 29 oder Regensensor 19 oder dergleichen, angesteuert wird. Die hier dargestellten Steuerelemente sind aber an anderen Orten des Fahrzeuges angebracht.

Die als Rohrrahmenanlage ausgebildete Scheibenwischeranlage 7 besitzt 4 Befestigungspunkte 30, an welchen sie durch Schraubverbindungen an der Fahrzeugkarosserie zu befestigen ist. Diese Befestigungspunkte 30 werden gleichzeitig dazu benutzt, die Scheibenwischeranlage 7 mit dem Behältnis 6 zu einem Modul zu verbinden. Dementsprechend sind an dem Behältnis 6 an den entsprechenden Orten die Befestigungspunkte 30' in Form entsprechender Durchgangsöffnungen vorgesehen. Außerdem ist es erforderlich, daß die Lagerwellen der Wischerlager 23 das Behältnis 6 mit ihrem freien Ende durchgreifen können. Deshalb weist das Behältnis 6 noch zwei entsprechende Durchgangsöffnungen 31 auf, um die Lagerwellen der Wischerlager 23 von unten hindurchstecken zu können. Mittels entsprechender Schrauben 32 sind die Scheibenwischeranlage 7 und das Behältnis 6 an den genannten Befestigungspunkten 30, 30' miteinander zu einem Modul zu verbinden.

In Fig. 2 sind noch die beiden Wischarme 33 dargestellt, die jeweils ein Wischblatt 34 tragen. An den Wischarmen 33 ist jeweils eine Spritzdüse 35 zur Abgabe von Waschflüssigkeit auf die zu reinigende Scheibe angebracht. Über einen am Wischarm 33 verlaufenden Schlauch ist die Spritzdüse 35 mit dem Flüssigkeitskanal in der Lagerwelle des Wischlagers 23 verbunden.
In der Praxis ist es allgemein üblich, daß die Wischarme 33, 34 nicht im an die Scheibenwischeranlage 7 montierten Zustand an den Fahrzeughersteller ausgeliefert werden. Sie werden separat geliefert und nach Montage des Moduls am Fahrzeug auf den Enden der Lagerwellen der Wischlager 23 befestigt. Zur Befestigung des Moduls an der Fahrzeugkarosserie dienen ebenfalls die Befestigungspunkte 30, 30'.

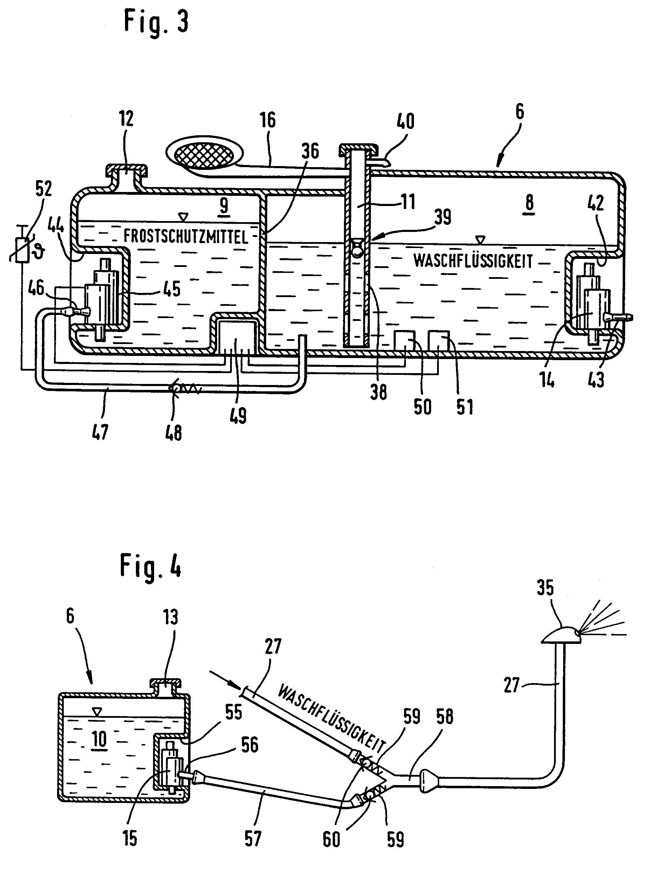

Fig. 3 zeigt eine schematische Teilübersicht eines Behältnisses 6 eines Moduls in Schnittdarstellung. Im rechten Abschnitt der Fig. 3 ist der Tank 8 für Waschflüssigkeit zu erkennen, der durch eine Trennwand 36 von dem in Fig. 3 links angeordneten Tank 9 für Frostschutzmittel abgegrenzt ist. Der Tank 8 für Waschflüssigkeit ist über einen Einfüllstutzen 11 befüllbar. Dieser Einfüllstutzen ist den Gegebenheiten entsprechend besonders ausgebildet. Er erstreckt sich in Form eines Rohres bis in die Nähe des Bodens des Tanks 8 und besitzt im unteren Bereich mehrere seitliche Austrittsöffnungen 38. Innherhalb des Rohres des Einfüllstutzens 11 ist in einer bestimmten Höhe ein Schwimmkugelventil angeordnet, welches als Füllstandsbegrenzer 39 wirkt und das oberhalb des Füllstandsbegrenzers liegende Tankvolumen für die Zumischung eines bestimmten Volumens frostschutzmittelfrei hält. Mit dem Füllstandsbegrenzer 39 wirkt ein am oberen Ende des Einfüllstutzen 11 angebrachter Überlauf 40 zusammen, über den eine Übermenge eingefüllter Flüssigkeit abgeleitet werden kann. Es ist noch angedeutet, daß am oberen Ende des Einfüllstutzens 11 ein Regenwassereinlauf 16 in diesen Einfüllstutzen 11 einmündet. Der Füllstandsbegrenzer 39 und der Überlauf 40 sind also auch dann wirksam, wenn über den Regenwassereinlauf 16 dem Tank 8 Regenwasser zugeführt wird.

In einer seitlichen Nische 42 des Behältnisses 6 ist die Pumpe 14 zur Förderung von Waschflüssigkeit angeordnet. Ihr ausgangsseitiger Anschlußstutzen 43 ist mit einer Waschflüssigkeitsleitung 27 verbindbar, über die Waschflüssigkeit zu den an den Wischarmen 33 angebrachten Spritzdüsen 35 transportiert wird. In einer anderen Nische 44 des Behältnisses 6 ist eine Pumpe 45 für Frostschutzmittel angeordnet, an deren ausgangsseitigen Anschlußstutzen 46 eine Flüssigkeitsleitung 47 angeschlossen ist, in welche ein Rückschlagventil 48 eingesetzt ist. Die Flüssigkeitsleitung 47 mündet durch den Boden in den Tank 8 für Waschflüssigkeit ein. Zur Steuerung des Vorganges des Überpumpens von Frostschutzmittel in den Tank für Waschflüssigkeit bei Gefahr des Einfrierens der Waschflüssigkeit wird die Pumpe 45 von einem elektonischen Steuerteil 49 angesteuert, welches ebenfalls in einer Nische des Behältnisses 6 untergebracht ist. Das elektronische Steuerteil 49 empfängt Signale von einem Sensor 50 zur Erfassung der Dichte der Waschflüssigkeit, von einem Sensor 51 zur Erfassung der Temperatur der Waschflüssigkeit und von einem Sensor 52 zur Erfassung der Außentemperatur. Anhand dieser empfangenen Signale vergleicht das elektronische Steuerteil 49 den aktuellen Grad des Frostschutzes der Waschflüssigkeit mit dem entsprechend der vorhandenen Außentemperatur erforderlichen Grad des Frostschutzes der Waschflüssigkeit und aktiviert bei Notwendigkeit die Pumpe 45, um Frostschutzmittel aus dem Tank 9 in den Tank 8 für Waschflüssigkeit überzupumpen. Dabei wird die Pumpe 45 so lange angesteuert, bis eine Angleichung des aktuellen Grades des Frostschutzes an den erforderlichen Grad des Frostschutzes der Waschflüssigkeit erfolgt ist. Es ist noch zu erwähnen, daß der Tank 9 für Frostschutzmittel separat durch einen Einfüllstutzen 12 befüllbar ist.

Die schematische Darstellung in Fig. 4 bezieht sich auf ein Ausführungsbeispiel, bei dem zusätzlich zu dem Tank 8 für Waschflüssigkeit und dem Tank 9 für Frostschutzmittel ein separater Tank 10 für Intensivreinigungsmittel vorgesehen ist. Das Intensivreinigungsmittel ist bedarfsweise, d. h. in Abhängigkeit vom Verschmutzungsgrad der zu reinigenden Scheibe, dem aus dem Tank 8 über die Waschflüssigkeitsleitung 27 den Spritzdüsen 35 zugeführten Waschflüssigkeitsstrom zuführbar. Der Einfachheit halber sind in Fig. 4 lediglich der Tank 10 für Intensivreinigungsmittel und das Leitungssystem für den Flüssigkeitstransport schematisch dargestellt. Der Tank 10 ist über einen separaten Einfüllstutzen 13 befüllbar, und in einer Nische 55 des Behältnisses 6 ist die Pumpe 15 für das Intensivreinigungsmittel angeordnet. An den ausgangsseitigen Anschlußstutzen 56 der Pumpe 15 ist ein Schlauchleitungsstück 57 angeschlossen, welches über ein Y-förmiges Kupplungsstück 58 in die Waschflüssigkeitsleitung 27 eingekuppelt ist. Die Waschflüssigkeitsleitung 27 und das Schlauchleitungsstück 57 sind jeweils an einen eingangsseitigen Schenkel 59 des Kupplungsstückes 58 angeschlossen. In jedem eingangsseitigen Schenkel 59 ist ein Rückschlagventil 60 angeordnet, welche verhindern, daß Flüssigkeit aus dem zwischen dem Kupplungsstück und der Spritzdüse 35 angeordneten Teil der Waschflüssigkeitsleitung 27 in den Tank 8 für Waschflüssigkeit bzw. den Tank 10 für Intensivreinigungsmittel zurücklaufen kann.

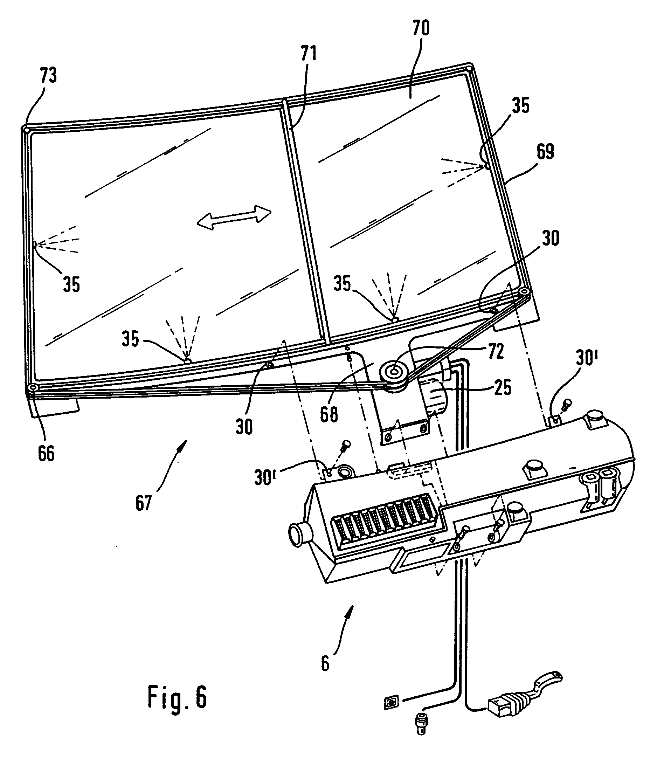

In Fig. 5 ist in teilweise geschnittener Darstellung ein Abschnitt des Teiles des Behältnisses 6 dargestellt, in welchem ein Frischluftfilter 61 angeordnet ist. Dieses Frischluftfilter 61 ist eingentlich ein Filtersystem, in welchem in Baueinheit ein Feinfilter 62 und ein nachgeschaltetes Aktivkohlefilter 63 vereinigt sind. Dieses Frischluftfilter 61 ist kassettenförmig konstruiert und von oben her in eine kastenförmige Ausnehmung 64 des Behältnisses 6 eingesetzt. Mittels einiger geeigneter Befestigungselemente 65 ist das Frischluftfilter in der Ausnehmung arretiert. Um eine einfach Austauschbarkeit des Frischluftfilters 61 zu ermöglichen, sind diese Befestigungs-mittel 65 insbesondere in Form von Rastverbindungen ausgebildet, welche ohne Verwendung zusätzlicher Werkzeuge bedienbar sind. Die oben offene Seite des in die Ausnehmung 64 eingesetzten Frischluftfilter 61 ist für den Lufteintritt vorgesehen. Die durch das Frischluftfilter 61 gereinigte Luft tritt aus dem seitlichen Anschlußstutzen 18 aus dem Behältnis 6 aus. An den Anschlußstutzen 18 ist dann später eine Leitung anschließbar, welche die gereinigte Luft dem Fahrzeuginnenraum 2 zuführt.

In Fig. 6 ist ein anderes Ausführungsbeispiel eines Moduls für ein Kraftfahrzeug gezeigt. Dieses Modul weist ein Behältnis 6 auf, welches dem in Fig. 2 dargestellten Behältnis 6 im wesentlichen gleicht. Aus diesem Grund wird auch an dieser Stelle auf eine Wiederholung der ausführlichen Beschreibung dieses Behältnisses 6 verzichtet. Nachfolgend werden lediglich geringfügige Unterschiede zu dem in Fig. 2 dargestellten Behältnis 6 beschrieben. Für die Verbindung der Linearwischeranlage 67 mit dem Behältnis 6 sind geringfügig veränderte Befestigungspunkte 30' erforderlich, da die Befestigungspunkte 30 am Träger 68 der Linearwischeranlage umständehalber an einem anderen Ort als bei der Rohrrahmenanlage gemäß Fig. 2 vorgesehen sind. Dementsprechend sind zwei Befestigungspunkte 30' an den hinteren oberen Rand des Behältnisses verlegt worden. Die anderen zwei Befestigungspunkte 30 der Linearwischeranlage bzw. 30' des Behältnisses 6 sind am gleichen Ort wie bei Fig. 2 vorgesehen und bleiben unverändert erhalten. Die Durchgangsöffnungen der nicht benötigten Befestigungspunkte 30' des Behältnisses 6 werden entweder nicht hergestellt oder werden nachträglich durch geeignete Verschlußkappen überdeckt. Ebenso werden die bei dem Ausführungsbeispiel gemäß Fig. 2 benötigten Durchgangsöffnungen 31 für die Lagerwellen der Wischlager 23, die bei dem Ausführungsbeispiel gemäß Fig. 6 nicht benötigt werden, entweder nicht hergestellt oder durch entsprechende Verschlußkappen abgedeckt.

Die eigentlich Linearwischeranlage 67 weist den Träger 68 auf, zu dem ein Rahmen 69 gehöhrt, der die Windschutzscheibe 70 in sich aufnimmt. Der Träger 68 bzw. Teile des Rahmens 69 sind so ausgebildet, daß in sie die erforderlichen Führungsschienen für den quer über die Winschutzscheibe 70 bewegbaren Wischer 71 integriert sind. An dem Träger 68 sind außerdem der Wischermotor 25 und ein Seilgetriebe zum Antrieb des Wischers 71 angeordnet. Neben der Seilantriebsrolle 72 gehören zu dem Seilgetriebe noch verschiedene Seilumlenkrollen 66. Ansonsten ist der Träger 68 so geformt, daß er anstelle einer Rohrrahmenanlage 7 mit dem Behältnis 6 verbindbar ist, wobei das Behältnis 6 auch in diesem Fall nahezu komplementär betreffenden Partien der Linearwischeranlage 67 umgibt. Aus Fig. 6 ist noch ersichtlich, daß der Rahmen 69 der Linearwischeranlage bereits mit mehreren Spritzdüsen 35 ausgestattet ist.

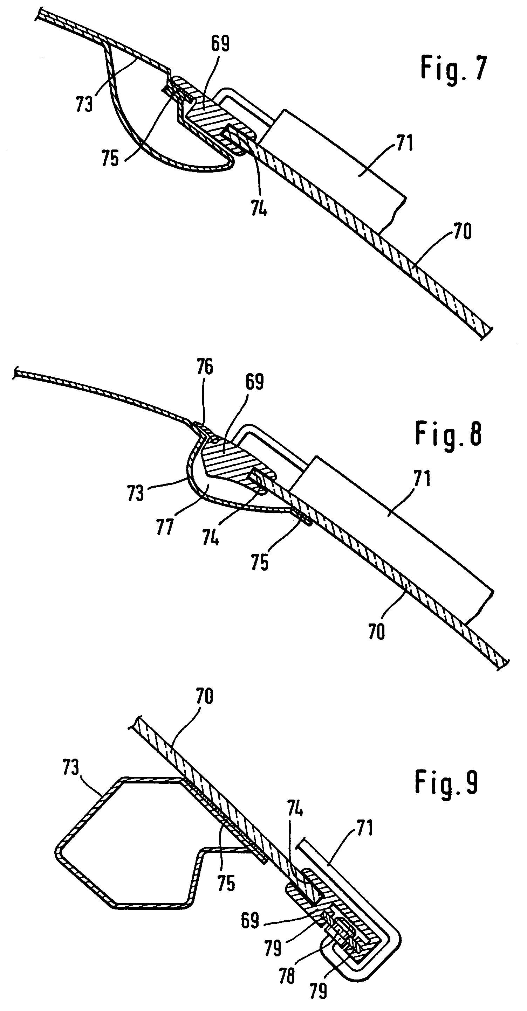

Die Fig. 7 und 8 zeigen zwei verschiedene Beispiele für die Verbindung der Linearwischeranlage im Bereich des Randes der Windschutzscheibe 70 mit der Karosserie 73, wobei in diesen Figuren der obere Rand der Windschutzscheibe 70 dargestellt ist. In den Figuren ist zu erkennen, daß der Rand der Windschutzscheibe 70 in eine Nut 74 des Rahmens 69 eingelassen ist, wobei klar ist, daß diese Verbindung eventuell unter Verwendung von Dichtungsmitteln wasserdicht ausgeführt ist. In den oberen Rand des Rahmens 69 ist gleichzeitig die Funktion einer Führungsschiene integriert, in welcher der Wischer 71 in Querrichtung über die Windschutzscheibe 70 bewegbar geführt ist. In Fig. 7 ist zu erkennen, daß der obere Rand des Rahmens 69 durch eine Verklebung 75 unmittelbar an der Fahrzeugkarosserie befestigt, wobei diese Verbindung gleichzeitig dichtend ausgebildet ist. Im Unterschied dazu ist bei dem Beispiel in Fig. 8 die Befestigung durch eine Verklebung der Windschutzscheibe 70 mit der Karosserie 73 verbunden. Der Rahmen 69 ist dabei in einer entsprechenden Vertiefung der Karosserie 73 angeordnet, und eine zusätzliche Dichtung 76, die an dem Rahmen 69 befestigt ist und an der Karosserie anliegt, dichtet den durch die Vertiefung der Karosserie 73 gebildeten Hohlraum 77 gegen die Umwelt ab.

Fig. 9 zeigt ein Beispiel für die Verbindung der Linearwischanlage mit der Karosserie 73 im Bereich des unteren Randes der Windschutzscheibe 70. Diese Verbindung ist sowohl mit der in der Fig. 7 oder der in Fig. 8 gezeigten Verbindungsmöglichkeit am oberen Rand der Windschutzscheibe 70 verwendbar. In Fig. 9 ist zu sehen, daß auch der untere Rand der Windschutzscheibe 70 in einer Nut 74 des Rahmens 69 angeordnet ist, wobei vorzugsweise auch diese Verbindung dichtend ausgeführt ist. An dem mehrfach rechtwinklig umgebogenen unteren Endabschnitt des Wischers 71 ist eine Führungsrolle 78 erkennbar, welche zwischen den beiden gegenüberliegenden, in den unteren Rand des Rahmens 69 integrierte Führungsschienen 79 gelagert ist. Es ist noch zu erkennen, daß die Windschutzscheibe in der Nähe ihres unteren Randes durch die Verklebung 75 an einem hohlprofilartigen Gebilde der Karosserie 73 befestigt ist.

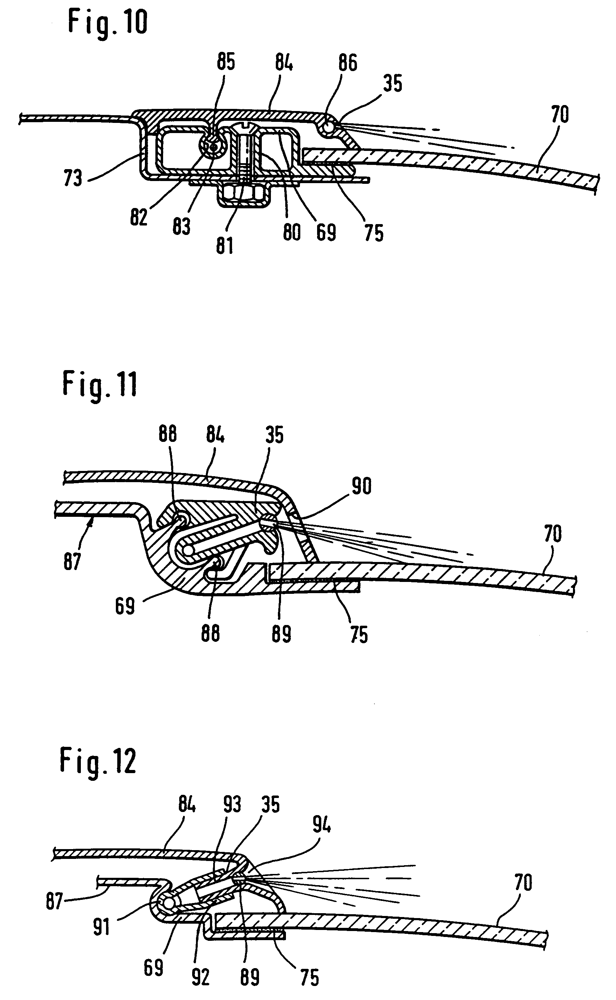

Fig. 10 zeigt anhand eines seitlichen Randes der Windschutzscheibe 70 ein Ausführungsbeispiel für die Gestaltung des Rahmens 69 einer Linearwischeranlage 67 und die Verbindung des Rahmens 69 der Windschutzscheibe 70 bzw. des Rahmens 69 mit der Karosserie 73. Der Rahmen 69, der wiederum durch eine Verklebung 75 mit dem Rand der Windschutzscheibe verbunden ist, ist im wesentlichen als Hohlprofil ausgebildet. In Abständen voneinander sind in das Hohlprofil hülsenartige Durchgangsöffnungen 80 eingearbeitet, welche für die Aufnahme einer Befestigungsschraube 81 zur Befestigung des Rahmens 69 an der Karosserie 73 vorgesehen ist. In das Hohlprofil des Rahmens 69, welches vorteilhaft aus Aluminium oder aus einem geeigneten Kunststoff hergestellt ist, ist außerdem ein Kanal 82 integriert, in welchem das Seil 83 zum Bewegen des hier nicht dargestellten Wischers 71 angeordnet und geführt ist. Eine mit dem Rahmen 69 rastend verbindbare Blende 84 überdeckt den Rahmen 69 und die Verbindungsstelle zwischen Windschutzscheibe 70 und Rahmen 69 sowie Rahmen 69 und Karosserie 73. Die Blende 84 besitzt an ihrer Innenfläche Rastvorsprünge 85, welche in vorteilhafter Weise in den nach außen weisenden Öffnungsschlitz des Kanals 82 einrastbar sind. Außerdem sind in die der Windschutzscheibe 70 zugewandte Längsseite der Blende 84 ein Kanal 86 zum Transport für Waschflüssigkeit sowie mehrere über die Länge des Scheibenrandes verteilt angeordnete Spritzdüse 35 eingeformt.

Ein anderes Ausführungsbeispiel ist in Fig. 11 dargestellt. Der Rahmen 69 ist wiederum durch eine Verklebung 75 mit der Windschutzscheibe 70 verbunden. Die nicht dargestellte Verbindung des Rahmens 69 mit der Karosserie könnte im Abschnitt 87 ebenfalls durch eine Verklebung erfolgen. Die Besonderheit dieses Ausführungsbeispiels ist darin zu sehen, daß der Rahmen 69 an vorbestimmten Orten mit angeformten Rastaufnahmen 88 ausgestattet ist, in welche jeweils eine Spritzdüse 35 einsetzbar ist. Eine Blende 84 überdeckt wiederum den Bereich des Rahmens 69. An den Stellen, an denen jeweils die verstellbare Düsenkügel 89 einer Spritzdüse 35 positioniert ist, ist in der Blende 84 eine entsprechend große Öffnung 90 vorhanden, durch welche der von der Düsenkugel 89 abgegebene Spritzstrahl auf die Windschutzscheibe 70 gelangen kann.

Ein letztes Ausführungsbeispiel ist in Fig. 12 dargestellt. Die Windschutzscheibe 70 ist wiederum durch eine Verklebung 75 mit dem Träger 69 verbunden. Der Träger 69 weist eine solche vorteilhafte Querschnittsform auf, daß er durch Extrudieren herstellbar ist. Die im Zusammenhang mit diesem Träger 69 verwendbaren Spritzdüsen 35 sind gewissermaßen zweiteilig ausgebildet. Das untere Basisteil mit einem in Längsrichtung des Rahmens 69 angeordneten zylindrischen Ansatz 91 ist in einem korrespondierenden kanalartigen Profilteil des Rahmens 69 angeordnet und in diesem gehalten. Von diesem zylindrischen Ansatz 91 aus, an den eine Flüssigkeitsleitung für Waschflüssigkeit anschließbar ist, erstreckt sich ein hohlzylindrischer Abschnitt 92, in welchen teleskopartig ein hohlzylindrischer Ansatz 93 einzustecken ist, welcher an die Innenseite der Blende 84 einstückig angeformt ist. In die sich nach außen erweiternde Mündung 94 dieses hohlzylindrischen Ansatzes 93 ist eine verstellbare Düsenkugel 89 eingesetzt. Die Blende 94 wird gleichzeitig durch die Verbindung zwischen dem hohlzylindrischen Abschnitt 92 und dem hohlzylindrischen Ansatz 93, welche Teile der Spritzdüse 35 sind, an dem Rahmen 69 gehalten. Auch in diesem Ausführungsbeispiel ist der Rahmen 69 in seinem Abschnitt 87 durch Verkleben mit der Karosserie 73 verbindbar.

### Bezugszeichenliste

- 1: Motorraum
- 2: Fahrzeuginnenraum
- 3: Spritzwand
- 4: Öffnung
- 5: Wasserkasten
- 6: Behältnis
- 7: Scheibenwischeranlage
- 8: Tank für Waschflüssigkeit
- 9: Tank für Frostschutzmittel
- 10: Tank für Intensivreinigungsmittel
- 11: Einfüllstutzen für Waschflüssigkeit
- 12: Einfüllstutzen für Frostschutzmittel
- 13: Einfüllstutzen für Intensivreinigungsmittel
- 14: Pumpe
- 15: Pumpe
- 16: Regenwassereinlauf
- 17: Luftdurchtritt
- 18: Austrittsstutzen
- 19: Regensensor
- 20: Motorraumbeleuchtung
- 21: Schalter
- 22: Rohrrahmen
- 23: Wischlager
- 24: Motortragplatte
- 25: Wischermotor
- 26: Gestänge
- 27: Waschflüssigkeitsleitung
- 28: Steckverbindung
- 29: Lenkstockschalter
- 30: Befestigungspunkt
- 30': Befestigungspunkt
- 31: Durchgangsöffnung
- 32: Schraube
- 33: Wischarm
- 34: Wischblatt
- 35: Spritzdüse
- 36: Trennwand
- 38: Austrittsöffnung
- 39: Füllstandsbegrenzer
- 40: Überlauf
- 42: Nische
- 43: Anschlußstutzen
- 44: Nische
- 45: Pumpe
- 46: Anschlußstutzen
- 47: Flüssigkeitsleitung
- 48: Rückschlagventil
- 49: Elektronisches Steuerteil
- 50: Sensor
- 51: Sensor
- 52: Sensor
- 55: Nische
- 56: Anschlußstutzen
- 57: Schlauchleitungsstück
- 58: Kupplungsstück
- 59: Schenkel
- 60: Rückschlagventil
- 61: Frischluftfilter
- 62: Feinfilter
- 63: Aktivkohlefilter
- 64: Ausnehmung
- 65: Befestigungselement
- 66: Seilumlenkrolle
- 67: Linearwischeranlage
- 68: Träger
- 69: Rahmen
- 70: Windschutzscheibe
- 71: Wischer
- 72: Seilantriebsrolle
- 73: Karosserie
- 74: Nut
- 75: Verklebung
- 76: Dichtung
- 77: Hohlraum
- 78: Führungsrolle
- 79: Führungsschiene
- 80: Durchgangsöffnung
- 81: Befestigungsschraube
- 82: Kanal
- 83: Seil
- 84: Blende
- 85: Rastvorsprung
- 86: Kanal
- 87: Abschnitt
- 88: Rastaufnahme
- 89: Düsenkugel
- 90: Öffnung
- 91: Ansatz
- 92: Abschnitt
- 93: Ansatz
- 94: Mündung

## Patentansprüche

1. Modul für ein Kraftfahrzeug, welches eine Scheibenwischeranlage (7) und eine Scheibenwaschanlage aufweist, wobei ein Behältnis (6), welches zum großen Teil als Flüssigkeitsbehälter ausgebildet ist und einen Tank (8) für Waschflüssigkeit besitzt sowie eine dem Tank (8) zugeordnete Pumpe (14) trägt, so geformt ist, daß es die Scheibenwischeranlage (7) zumindest annähernd komplementär umgibt und als Abdeckung des als Wasserkasten (5) bezeichneten, unmittelbar vor der Spritzwand (3) und unterhalb der Windschutzscheibe (4) liegenden Bereiches der Fahrzeugkarosserie dient und außerdem einen mit einem Frischluftfilter versehenen Luftdurchtritt (17) zum Fahrzeuginnenraum (2) aufweist, wobei die auf einen Träger montierte Scheibenwischeranlage (7) mit dem Behältnis (6) zu einer Baueinheit verbindbar ist, **gekennzeichnet durch** die Kombination der folgenden Merkmale:
1.1. das Behältnis (6) besitzt unabhängig von dem Tank (8) für Waschflüssigkeit wenigstens einen weiteren, separat befüllbaren Tank und zwar
1.1.1. einen Tank (9) für Frostschutzmittel oder
1.1.2. einen Tank (9) für Frostschutzmittel und einen Tank (10) für Intensivreinigungsmittel,
1.2. das Behältnis (6) trägt für jeden Tank (9, 10) eine diesem Tank zugeordnete Pumpe (45, 15),
1.3. der Ausgang der Pumpe (45) für Frostschutzmittel mündet über eine Flüssigkeitsleitung (47) in den Tank (8) für Waschflüssigkeit ein,
1.4. der Einfüllstutzen (11) des Tanks (8) für Waschflüssigkeit ist mit einem Füllstandsbegrenzer (39) ausgestattet, welcher ein ausreichend großes Tankvolumen für die Zumischung von Frostschutzmittel freihält.

2. Modul nach Anspruch 1, **dadurch gekennzeichnet**, daß die an den Ausgang der Pumpe (45) für Frostschutzmittel angeschlossene Flüssigkeitsleitung (47) durch den Boden oder nahe dem Boden durch eine Seitenwand in den Tank (8) für Waschflüssigkeit einmündet und ein Rückschlagventil (48) in dieser Flüssigkeitsleitung (47) angeordnet ist, welches das Überströmen von Waschflüssigkeit in den Tank (9) für Frostschutzmittel verhindert.

3. Modul nach einem der vorhergenden Ansprüche, **dadurch gekennzeichnet**, daß mit einem elektronischen Steuerteil (49) die Ausgänge eines Sensors (50) zur Erfassung der Dichte der Waschflüssigkeit, eines Sensors (51) zur Erfassung der Temperatur der Waschflüssigkeit und eines Sensors (52) zur Erfassung der Außentemperatur verbunden sind und daß das Steuerteil (49) in Auswertung der von den Sensoren (50, 51, 52) abgegebenen Signalen bei Gefahr des Einfrierens der Waschflüssigkeit die Pumpe (45) für Frostschutzmittel ansteuert und in erforderlichem Maße aktiviert.

4. Modul nach Anspruch 3, **dadurch gekennzeichnet**, daß das elektronische Steuerteil (49) in einer gesonderten Kammer oder einer Nische des Behältnisses (6) untergebracht ist.

5. Modul nach einem der vorhergehenden Ansprüche, **dadurch gekennzeichnet**, daß bei Vorhandensein eines Tanks (10) für Intensivreinigungsmittel das von der zugehörigen Pumpe (15) geförderte Intensivreinigungsmittel in die zur Spritzdüse (35) führende Waschflüssigkeitsleitung (27) eingekuppelt wird.

6. Modul nach Anspruch 5, **dadurch gekennzeichnet**, daß die Einkupplung des Intensivreinigungsmittelstromes über ein Schlauchleitungsstück (57) mittels eines T- oder Y-förmigen Kupplungsstückes (58) erfolgt, wobei jeweils ein Rückschlagventil (60) in Förderrichtung vor dem Ort der Einkupplung angeordnet ist und das Zurücklaufen eines Flüssigkeitsgemisches in den jeweiligen Tank (8, 10) und das Leerlaufen der Waschflüssigkeitsleitung (27) zwischen Kupplungsstück (58) und Spritzdüse (35) verhindert.

7. Modul nach einem der vorhergehenden Ansprüche, **dadurch gekennzeichnet**, daß die Pumpen (14, 15, 45) bedarfsweise durch den Fahrer des Kraftfahrzeuges und bei entsprechenden Bedingungen durch eine programmierte Steuerung aktivierbar sind.

8. Modul nach einem der vorhergehenden Ansprüche, **dadurch gekennzeichnet**, daß der Tank (8) für Waschflüssigkeit mit einem Regenwassereinlauf (16) ausgestattet ist, der mit einem Füllstandsbegrenzer für Waschflüssigkeit wirkverbunden ist und der zu einer entsprechenden Regenwasserauffangvorrichtung gehört, welche im Bedarfsfall mittels eines geeigneten Verschlusses gegenüber der Umwelt abschottbar und damit deaktivierbar ist.

9. Modul nach Anspruch 8, **dadurch gekennzeichnet**, daß der Regenwassereinlauf (16) an den Einfüllstutzen (11) des Tanks (8) für Waschflüssigkeit angeschlossen ist, in welchem bereits ein Füllstandsbegrenzer (39) angeordnet ist.

10. Modul nach einem der vorhergehenden Ansprüche, **dadurch gekennzeichnet**, daß ein Regensensor (19) bzw. Feuchtigkeitssensor zur Steuerung der Scheibenwischeranlage (7) in einem zur Windschutzscheibe weisenden, nicht von der Motorhaube überdecktem Abschnitt des Behältnisses (6) angeordnet ist.

11. Modul nach einem der Ansprüche 1 bis 10, **dadurch gekennzeichnet**, daß verschiedene Typen von Scheibenwischeranlagen derart gleichgestaltete Partien und Befestigungsabschnitte aufweisen, daß wahlweise irgendeine dieser Scheibenwischeranlagen mit einem gleichen Behältnis kombinierbar ist.

12. Modul nach einem der vorhergehenden Ansprüche, **dadurch gekennzeichnet**, daß es als Scheibenwischeranlage eine sogenannte Linearwischeranlage (67) aufweist, bei welcher die für das Kraftfahrzeug bestimmte Windschutzscheibe (70) von einem sie an den Rändern umfassenden Rahmen (69) aufgenommen ist, in den eine Führungsschiene (79) für eine linear über die Windschutzscheibe (70) bewegbare Wischvorrichtung integriert ist und an dem der Wischermotor (25) und ein entsprechendes Getriebe zum Antrieb der Wischvorrichtung angebracht sind.

13. Modul nach Anspruch 12, **dadurch gekennzeichnet**, daß in den Rahmen (69) der Linearwischeranlage (67) oder in eine Blende (84) für den Rahmen (69) Spritzdüsen (35) eingeformt oder eingeklipst sind und eingeformte oder vormontierte Flüssigkeitsleitungen integriert sind.

14. Modul nach Anspruch 12 oder 13, **dadurch gekennzeichnet**, daß der Rahmen (69) der Linearwischeranlage (67) form- und/oder kraftschlüssig mit der Windschutzscheibe (70) verbunden ist.

15. Modul nach einem der Ansprüche 12 bis 14, **dadurch gekennzeichnet**, daß der Rahmen (69) mit der Windschutzscheibe (70) verklebt ist.

16. Modul nach einem der Ansprüche 12 bis 15, **dadurch gekennzeichnet**, daß die Windschutzscheibe (70) den Rahmen (69) der Linearwischeranlage (67) trägt und außerdem durch Verkleben an der Karosserie (73) befestigbar ist.

17. Modul nach einem derr Ansprüche 12 bis 15, **dadurch gekennzeichnet**, daß der Rahmen (69) die Windschutzscheibe (70) trägt und mit der Karosserie (73) zu verschrauben oder zu verkleben ist.

18. Modul nach einem der vorhergehenden Ansprüche, **dadurch gekennzeichnet**, daß das Frischluftfilter (61) als Filtersystem aus einem Feinfilter (62) und einem nachgeordneten Aktivkohlefilter (63) ausgebildet ist, welches auswechselbar in der Ausnehmung (64) des Behältnisses (6) angebracht ist.

19. Modul nach einem der vorhergehenden Ansprüche, **dadurch gekennzeichnet**, daß in das Behältnis (6) eine Motorraumbeleuchtung (20) und ein durch Öffnen bzw. Schließen der Motorhaube betätigbarer Schalter (21) für die Motorraumbeleuchtung (20) integriert sind, wobei sich die Motorraumbeleuchtung (20) vorzugsweise an der in Fahrtrichtung nach vorn weisenden Seite des Behältnisses (6) befindet.

## Claims

1. Module for a motor vehicle, comprising a windshield wiper system (7) and a windshield washer system, wherein a receptacle (6) that is essentially realized in the form of a fluid container and is provided with a tank (8) for washing fluid and a pump (14) associated to the tank (8) is shaped such that it surrounds the windshield wiper system (7) at least approximately complimentarily and serves as a cover of the region which is called as radiator tank (5) and which is located directly in front of the dashboard (3) and below the windshield (4) of the motor vehicle body and which also is provided an air passage (17) having a fresh air filter for that leads to the passenger compartment (2), the windshield wiper system mounted on a carrier is connectable to the container to a construction unit, characterized by the combination of the following features:
1.1 the receptacle (6) comprises independent to the tank (8) for washing fluid at least one further tanks that can be separably filled, namely
1.1.1 a tank (8) for antifreeze, or
1.1.2 a tank (9) for antifreeze and a tank (10) for a strong cleaning agent,
1.2 the receptacle (6) carries pumps (45, 15) that are assigned to the respective tanks (9, 10),
1.3 the outlet of the pump (45) for the antifreeze runs into the tank (8) for the washing fluid via a fluid line (47),
1.4 the filler neck (11) of the tank (8) for the washing fluid is equipped with a filling level limiter (39) that maintains a sufficiently large tank volume free for admixing the antifreeze.

2. Module according to Claim 1, characterized in that the fluid line (47) that is connected to the outlet of the pump (45) for the antifreeze runs into the tank (8) for the washing fluid through the tank bottom or a side wall in the vicinity of the tank bottom, wherein a return valve (48) that prevents an overflow of the washing fluid into the tank (9) for the antifreeze is arranged in said fluid line (47).

3. Module according to one of the previous claims, characterized in fact that the electronic control element (49) is connected to the output of a sensor (50) for measuring the density of the washing fluid, the output of a sensor (51) for measuring the temperature of the washing fluid, and the output of a sensor (52) for measuring the outside temperature, and by the fact that the control element (49) triggers the pump (45) for the antifreeze and activates said pump to the required degree if the evaluation of the signals delivered by the sensors (50,51,52) indicates that the washing fluid may freeze.

4. Module according to Claim 3, characterized in that the electronic control element (49) is accommodated in a separate chamber or bay of the receptacle (6).

5. Module according to one of the previous claims, characterized in that if a tank (10) for a strong cleaning agent is provided, the strong cleaning agent conveyed by the corresponding pump (15) is coupled into the washing fluid line (27) that leads to the spraying nozzle (35).

6. Module according to Claim 5, characterized in that the strong cleaning agent is coupled into the washing fluid line via a hose line section (57) that is connected to a T-shaped or Y-shaped coupling piece (58), wherein one respective return valve (60) is arranged in front of the coupling point looking into the conveyance direction, and wherein said return valves prevent a fluid mixture from flowing back into the respective tank (8,10) as well as the emptying of the washing fluid line (27) located between the coupling piece (58) and the spraying nozzle (35).

7. Module according to one of the previous claims, characterized in that the pumps (14,15,45) can be activated upon demand by the driver of the motor vehicle or by a programmed control.

8. Module according to one of the previous claims, characterized in that the tank (8) for the washing fluid is equipped with a rainwater inlet (16) that is functionally connected to a filling level limiter for the washing fluid and forms part of a corresponding rainwater collecting device, wherein said rainwater inlet can be sealed relative to the surroundings and consequently rendered ineffective by means of a suitable closure.

9. Module according to Claim 8, characterized in that the rainwater inlet (16) is connected to the filler neck (11) of the tank (8) for the washing fluid which already comprises a filling level limiter (39).

10. Module according to one of the previous claims, characterized in that a rain sensor (19) or moisture sensor that serves for controlling the windshield wiper system (7) is arranged in a section of the receptacle (6) which points toward the windshield and is not covered by the hood of the motor vehicle.

11. Module according to one of Claims 1 - 10, characterized in that different types of windshield wiper systems are provided with identically designed sections and fastening sections such that any windshield wiper system can be selectively connected to the same receptacle.

12. Module according to one of the previous claims, characterized in that the module comprises a windshield wiper system in the form of a so-called linear wiper system (67), wherein the windshield (70) of the motor vehicle is accommodated in a frame (69) that surrounds the edges of the windshield and comprises integrated guide rails (79) for a wiper that linearly moves over the windshield (70), and wherein the wiper motor (25) and a corresponding gear for driving the wiper are arranged on said frame.

13. Module according to Claim 12, characterized in that spraying nozzles (35) are integrally formed or snapped into the frame (69) of the linear wiper system (67) or a diaphragm (84) for the frame (69), and by the fact that integral or pre-assembled fluid lines are provided in the aforementioned frame or diaphragm.

14. Module according to Claim 12 or 13, characterized in that the frame (69) of the linear wiper system (67) is form-closing and/or force-locking connected to the windshield (70).

15. Module according to one of Claims 12 - 14, characterized in that the frame (69) is adhered to the windshield (70).

16. Module according to one of Claims 12 - 15, characterized in that the windshield (70) carries the frame (69) of the linear wiper system (67) and is fastened to the motor vehicle body (73) by means of a binder.

17. Module according to one of Claims 12 - 15, characterized in that the frame (69) carries the windshield (70) and is connected to the motor vehicle body (73) by means of a screw connection or a binder.

18. Module according to one of the previous claims, characterized in that the fresh air filter (61) is realized in the form of a filter system that consists of a fine filter (62) and a subsequently arranged activated carbon filter (63) and is arranged in a recess (64) of the receptacle (6) in exchangeable fashion.

19. Module according to one of the previous claims, characterized in that an engine compartment light (20) and a switch (21) for the engine compartment light (20) that is activated by opening or closing the hood are integrated into the receptacle (6), wherein the engine compartment light (20) is preferably arranged on the front side of the receptacle (6) looking into the driving direction.

## Revendications

1. Module pour véhicule, comprenant un dispositif d'essuie-glace (7) et un dispositif lave-glace, dans lequel un récipient (6), qui est réalisé pour la plus grande partie sous forme d'enceinte pour liquide, contient un réservoir (8) pour liquide de lavage et porte une pompe (14) associée au réservoir (8), est conformé de façon à entourer d'une manière complémentaire, au moins approximativement, le dispositif lave-glace (7) et à servir de recouvrement à la zone de la carrosserie de véhicule située directement en avant du tablier (3) et au-dessous du pare-brise (4) et appelée boîte à eau (5), ce récipient (6) comportant par ailleurs un passage d'air (17) menant au compartiment intérieur de véhicule (2) et pourvu d'un filtre à air frais, tandis que le dispositif d'essuie-glace (7), monté sur un support, peut être relié au récipient (6) de façon à former une unité structurelle, caractérisé par la combinaison des particularités suivantes :
1.1. le récipient (6) contient, indépendamment du réservoir (8) de liquide de lavage, au moins un autre réservoir remplissable séparément, à savoir
1.1.1. un réservoir (9) pour antigel ou :
1.1.2. un réservoir (9) pour antigel et un réservoir (10) pour agent de nettoyage intensif,
1.2. le récipient (6) comporte, pour chaque réservoir (9, 10), une pompe (45, 15) associée à ce réservoir,
1.3. la sortie de la pompe (45) prévue pour l'antigel débouche, par l'intermédiaire d'une conduite de liquide (47) dans le réservoir (8) de liquide de lavage,
1.4. la tubulure de remplissage (11) du réservoir (8) de liquide de lavage est pourvue d'un limiteur de niveau (39) qui maintient libre un volume du réservoir suffisamment grand pour le mélange avec de l'antigel.

2. Module suivant la revendication 1, caractérisé en ce que la conduite de liquide (47) raccordée à la sortie de la pompe (45) d'antigel débouche dans le réservoir (8) de liquide de lavage en-traversant le fond ou en traversant, au voisinage du fond, une paroi latérale et il est prévu, disposée dans cette conduite de liquide (47), une valve antiretour (48) qui empêche le passage de liquide de lavage dans le réservoir (9) d'antigel.

3. Module suivant l'une des revendications précédentes, caractérisé en ce que les sorties d'un capteur (50) servant à capter la densité du liquide de lavage, d'un capteur (51) servant à capter la température du liquide de lavage et d'un capteur (52) servant capter la température extérieure sont reliées à une partie de commande électronique (49) et en ce qu'au moyen d'une analyse des signaux délivrés par les capteurs (50, 51, 52), en cas de risque de gel du liquide de lavage, la partie de commande (49) commande et active dans une mesure nécessaire la pompe (45) d'antigel.

4. Module suivant la revendication 3, caractérisé en ce que la partie de commande électronique (49) est disposée dans un compartiment particulier ou une niche du récipient (6).

5. Module suivant l'une des revendications précédentes, caractérisé en ce que, lorsqu'il existe un réservoir (10) d'agent de nettoyage intensif, l'agent de nettoyage intensif refoulé par la pompe (15) associée est introduit dans la conduite de liquide de lavage (27) menant à la buse de projection (35).

6. Module suivant la revendication 5, caractérisé en ce que l'introduction du courant d'agent de nettoyage intensif s'effectue par l'intermédiaire d'un tronçon de tuyau souple (57) et au moyen d'une pièce de raccordement (58) en T ou en Y, tandis que, pour chaque réservoir (8, 10), une valve antiretour (60) respective est disposée en amont de l'emplacement d'introduction dans le sens de refoulement, un mélange de liquide est empêché de refluer dans le réservoir (8, 10) considéré et la conduite de liquide de lavage (27) située entre la pièce de raccordement (58) et la buse de projection (35) est empêchée de se vider.

7. Module suivant l'une des revendications précédentes, caractérisé en ce que les pompes (14, 15, 45) sont activables en cas de besoin par le conducteur du véhicule automobile et dans des conditions appropriées par une commande programmée.

8. Module suivant l'une des revendications précédentes, caractérisé en ce que le réservoir (8) de liquide de lavage est pourvu d'une entrée d'eau de pluie (16) qui coopère avec un limiteur de niveau prévu pour le liquide de lavage et qui fait partie d'un dispositif de collecte d'eau de pluie correspondant qui, en cas de besoin, peut être fermé de manière étanche par rapport au milieu environnant au moyen d'une fermeture appropriée et est donc désactivable.

9. Module suivant la revendication 8, caractérisé en ce que l'entrée d'eau de pluie (16) est raccordée à la tubulure de remplissage (11) du réservoir (8) de liquide de lavage dans laquelle un limiteur de niveau (39) est déjà disposé.

10. Module suivant l'une des revendications précédentes, caractérisé en ce qu'un détecteur de pluie (19) ou un détecteur d'humidité servant à commander le dispositif d'essuie-glace (7) est disposé dans une section du récipient (6) tournée vers le pare-brise et non recouverte par le capot du moteur.

11. Module suivant l'une des revendications 1 à 10, caractérisé en ce que différents types de dispositifs d'essuie-glace comportent des sections de fixation et parties de structure identique, de façon qu'au choix, n'importe lequel de ces dispositifs d'essuie-glace soit combinable à un même récipient.

12. Module suivant l'une des revendications précédentes, caractérisé en ce qu'il comprend, en tant que dispositif d'essuie-glace, ce qu'il est convenu d'appeler un dispositif d'essuie-glace linéaire (67), dans le cas duquel le pare-brise (70) prévu pour le véhicule automobile est reçu par un cadre (69) qui en fait le tour sur les côtés, dans lequel un rail de guidage (79), prévu pour un dispositif d'essuie-glace mobile d'une manière linéaire sur le parebrise (70), est intégré et sur lequel le moteur d'essuieglace (25) et une transmission correspondante servant à entraîner le dispositif d'essuie-glace sont montes.

13. Module suivant la revendication 12, caractérisé en ce que des buses de projection (35) sont ménagées au formage ou agrafées, et des conduites de liquide ménagées au formage ou préassemblés sont intégrées, dans le cadre (69) du dispositif d'essuie-glace linéaire (67) ou dans un cache (84) prévu pour le cadre (69).

14. Module suivant la revendication 12 ou 13, caracterisé en ce que le cadre (69) du dispositif d'essuie-glace linéaire (67) est solidarisé par complémentarité de formes et/ou par application de force avec le pare-brise (70).

15. Module suivant l'une des revendications 12 à 14, caractérisé en ce que le cadre (69) est collé au pare-brise (70).

16. Module suivant l'une des revendications 12 à 15, caractérisé en ce que le pare-brise (70) porte le cadre (69) du dispositif d'essuie-glace linéaire (67) et peut par ailleurs être fixé par collage à la carrosserie (73).

17. Module suivant l'une des revendications 12 à 15, caractérisé en ce que le cadre (69) porte le pare-brise (70) et doit être fixé par vissage ou par collage à la carrosserie (73).

18. Module suivant l'une des revendications précédentes, caractérisé en ce que le filtre d'air frais (61) est réalisé sous forme d'un système de filtre qui est constitué d'un filtre fin (62) et d'un filtre à charbon actif (63) disposé en aval et qui est placé dans le logement (64) du récipient (6) de façon à pouvoir être remplacé.

19. Module suivant l'une des revendications précédentes, caractérisé en ce qu'un éclairage de compartiment moteur (20) et un interrupteur (21), destiné à l'éclairage de compartiment moteur (20) actionnable par ouverture ou fermeture du capot de moteur, sont intégrés dans le récipient (6), l'éclairage de compartiment moteur (20) étant de préférence situé sur la face du récipient (6) qui est tournée vers l'avant suivant la direction de conduite.
